# EUROPEAN PATENT SPECIFICATION

(11) **EP 1 619 857 B1**
(45) Date of publication and mention of the grant of the patent: **18.06.2008**
(21) Application number: 05105816.2
(22) Date of filing: 29.06.2005
(51) Int. Cl.: H04L 29/06

(54) **Electronic device with communication unit for streaming moving images**
Elektronisches Gerät mit einer Kommunikationseinheit zum Streamen von Videos
Appareil électronique avec élement de communication pour la transmission continueuse des vidéos

(30) Priority: 21.07.2004 JP 2004213609
(43) Date of publication of application: 25.01.2006
(73) Proprietor: KABUSHIKI KAISHA TOSHIBA, Tokyo (JP)
(72) Inventor: Kanaya, Kenryo, Toshiba Corp., IP Division, Tokyo 105-8001 (JP); Nakamura, Seiichi, Toshiba Corp., IP Division, Tokyo 105-8001 (JP)
(74) Representative: Henkel, Feiler & Hänzel

(56) References cited:
- WO-A-02/093808
- WO-A-02/096023
- US-A1- 2003 142 670
- US-B1- 6 728 776

## Description

One embodiment of the invention relates to an electronic device with a communication unit that receives data from an external device.

In recent years, users enjoy watching television broadcasts on displays of electronic devices such as personal computers and the like, that receive those broadcasts from broadcasting stations. Generally, a user turns on the power for the device and frequently switches channels corresponding to the broadcasting stations.

In the electronic device such as the personal computer described above, when the channel is changed, the moving picture is often discontinuous, and it takes time for the moving picture output of the new channel to be properly displayed. This causes the user to experience a feeling of visual discomfort. This situation is particularly likely to occur in electronic devices that receive television broadcast programs via a network from an external device on which a tuner is installed.

Japanese Patent Application Publication (KOKAI) No. 2001-285736 (hereinafter "publication") discloses one example of the technology for reducing the discomfort to the user at the time of switching channels. According to this publication, the technology disclosed therein eliminates the freezing of the display screen that occurs at the time of channel switching. In particular, in the case where channel switching from program 1 that is first channel to program 2 that is second channel occurs due to an operation by the user, time is required for a first tuner to select the transport waves to switch channels to receive and to decode standard resolution picture signals. To avoid the freezing of the display screen during this time period, a low resolution picture signal is obtained by a second tuner decoded and output onto the display.

However in the technology disclosed in the publication, two tuners and a switch are required to avoid the freezing of the display screen during switching of channels.

WO 02/096023 A discloses a method for sampling music on a wireless communication device that allows a user connected to a data network through a wireless communication device to preview audio items prior to making a purchasing decision. The wireless device establishes a first data connection to a data server and navigates through a menu system and selects to listen to an audio item. The data server instructs the wireless device to terminate the first data connection and establish a voice connection with an audio server. The audio server, which is notified by the data server of the audio item and the particular wireless device, plays the audio item once the voice connection is established with the wireless device. The wireless device subsequently establishes a second data connection with the data server and resumes navigation through the menu system at the point where the first data connection was terminated.

US 2003 0142670 A discloses a system and method for avoiding a single point of failure in the broadcast of streaming data. The system uses multiple redundant servers steaming the exactly same data to a failover device. The failover device buffers the steams into a primary and secondary data stream and automatically switches from the primary to the secondary data stream if it detects a corruption in the primary data stream. Since the buffered data packets of the two steams are identical and are synchronized, there is not outage for multicast receivers when the primary data source fails since there is a switch to exactly the same data in the next packet of the secondary data stream.

According to the present invention the above object is achieved by an electronic device according to claim 1 and by a method according to claim 6 The dependent claims are related to different advantageous aspects of the invention.

The invention can be more fully understood from the following detailed description when taken in conjunction with the accompanying drawings, in which:
FIG. 1 is a diagram showing an exemplary communication system according to an embodiment of the invention;
FIG. 2 is a block diagram showing an exemplary HTTP server device in the communication system of FIG. 1;
FIG. 3 is a block diagram showing an exemplary HTTP client device in the communication system of FIG. 1;
FIG. 4 is a diagram showing an exemplary operation of the HTTP server device and the HTTP client device in the communication system of FIG. 1 when switching channels;
FIG. 5 is an exemplary diagram showing the timing of the exemplary operation of switching channels in FIG. 4;
FIG. 6 is a block diagram showing an exemplary functional configuration of software for the HTTP client device of FIG. 3;
FIG. 7 is a first half of a flowchart showing an exemplary operation of an HTTP data transfer thread of the software of FIG. 6; and
FIG. 8 is a second half of the flowchart showing the exemplary operation of the HTTP data transfer thread of the software of FIG. 6.

Various embodiments of the invention will be described hereinafter with reference to the accompanying drawings. In general, according to one embodiment of the invention, an electronic device comprises a communication unit to receive one of a first data in a first external data source and a second data in a second external data source through a communication path, an interface to receive a request to connect to the second external data source, and a control unit. In the case that the communication unit receives the first data through the communication path when the interface receives the request, the control unit prepares a communication-ready path, which is ready to communicate, with the second external data source while the communication path is maintained, terminates the communication path after preparation for the communication-ready path, and changes the communication-ready path to the communication path to receive the second data.

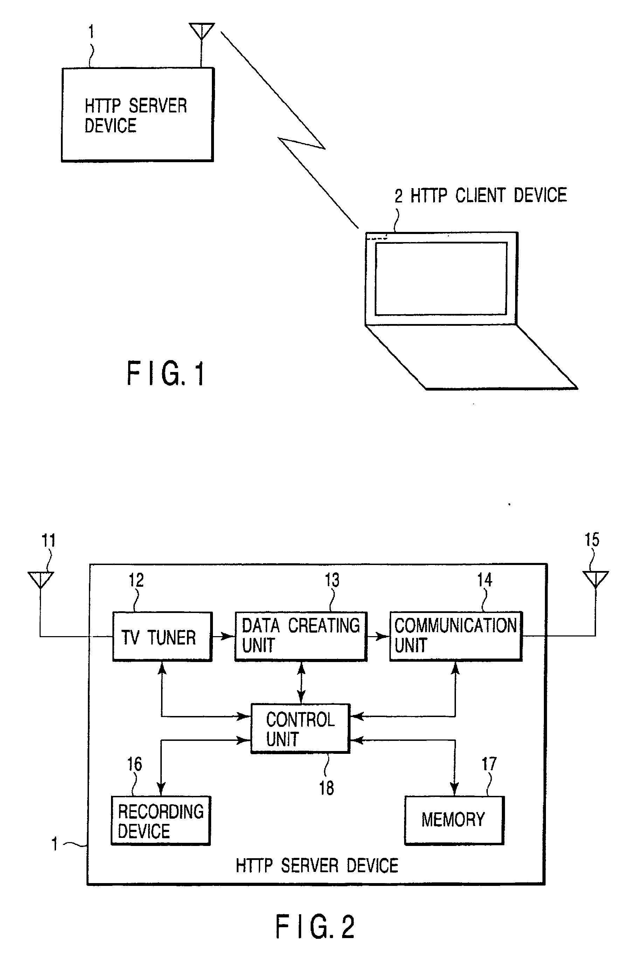

FIG. 1 shows an exemplary communication system.

The communication system comprises an HTTP server device 1 and at least one HTTP client device 2. The HTTP server device 1 includes a built-in TV tuner. The HTTP server device 1 and the HTTP client device 2 may be connected by a Local Area Network (hereinafter "LAN"), such as a wireless LAN or a wired LAN. While only one HTTP client device 2 is illustrated in FIG. 1, there may be a plurality of HTTP client devices 2.

The HTTP server device 1 may be realized as an access point or a personal computer, and may perform data transfer processing in compliance with a Hyper Text Transfer Protocol ("HTTP"). The HTTP server device 1 dynamically creates video data, which includes sound data attached thereto, of programs broadcasted from a TV broadcasting station according to a connection request from the HTTP client device 2. The connection request includes a video data transfer request. The HTTP server device 1 also transfers the video data associated with the connection request to the HTTP client device 2.

In the case where there is another connection request from the same HTTP client device 2 while the video data is being transferred, the HTTP server device 1 stops the video data transfer that was performed up until that point, executes disconnection, and executes the requested connection.

The HTTP client device 2 may be realized by, for example, a personal computer, and performs data transfer processing in compliance with the Hyper Text Transfer Protocol (HTTP). The HTTP client device 2, as described later, may include a recording device or a memory that stores a list of data indicating the relationship between the TV channel and the Uniform Resource Locator (hereinafter "URL"). The TV channel corresponds to the TV broadcasting station. When making a connection request, the HTTP client device 2 outputs the connection request specifying the URL corresponding to the TV channel to the HTTP server device 1, and obtains video data for the desired TV channel.

FIG. 2 is a block diagram of an exemplary HTTP server device 1 for the communication system illustrated in FIG. 1.

The HTTP server device 1 may include a TV antenna 11, a TV tuner 12, a data creation unit 13, a communication unit 14, an antenna 15 for wireless communication, a recording device 16, memory 17, and a control unit 18.

The TV antenna 11 receives electromagnetic waves from a TV broadcasting station and converts the electromagnetic waves into electric signals and sends them to the TV tuner 12.

The TV tuner 12 performs tuning processing based on the electric signals received from the TV antenna 11.

The data creation unit 13 creates video data for broadcasts from the electrical signals processed by the TV tuner 12. The data creation unit 13 functions as data sources, providing video data corresponding to TV broadcasting stations, respectively. Each of the data sources may be specified by individual URLs.

The communication unit 14 performs wireless communication in compliance with a wireless LAN, such as IEEE802.11a, IEEE802.11b, or IEEE802.11g, for example. During the wireless communication, the communication unit 14 receives connection requests from the HTTP client device 2, and then performs the requested connection processing to establish a communication path. After the communication path is established, the video data created by the data creation unit 13 is sent to the HTTP client device 2.

The antenna 15 sends and receives electromagnetic signals to and from the HTTP client device 2.

The recording device 16 is a nonvolatile recording device using a nonvolatile medium, such as a Hard Disc drive (hereinafter "HDD") or a digital versatile disc drive (hereinafter "DVD") or the like. The recording device 16 stores the programs and data necessary for the operation of the control unit 18.

The memory 17 is a volatile memory such as RAM or the like, and is used as the work area for the control unit 18 that executes programs and the like.

The control unit 18 is a CPU in one embodiment of the invention, and controls all the operations of the HTTP server device 1. For example, the control unit 18 retrieves the corresponding TV channel based on the URL indicated in the connection request that is sent from the HTTP client device 2, and tunes the TV tuner 12 to that TV channel.

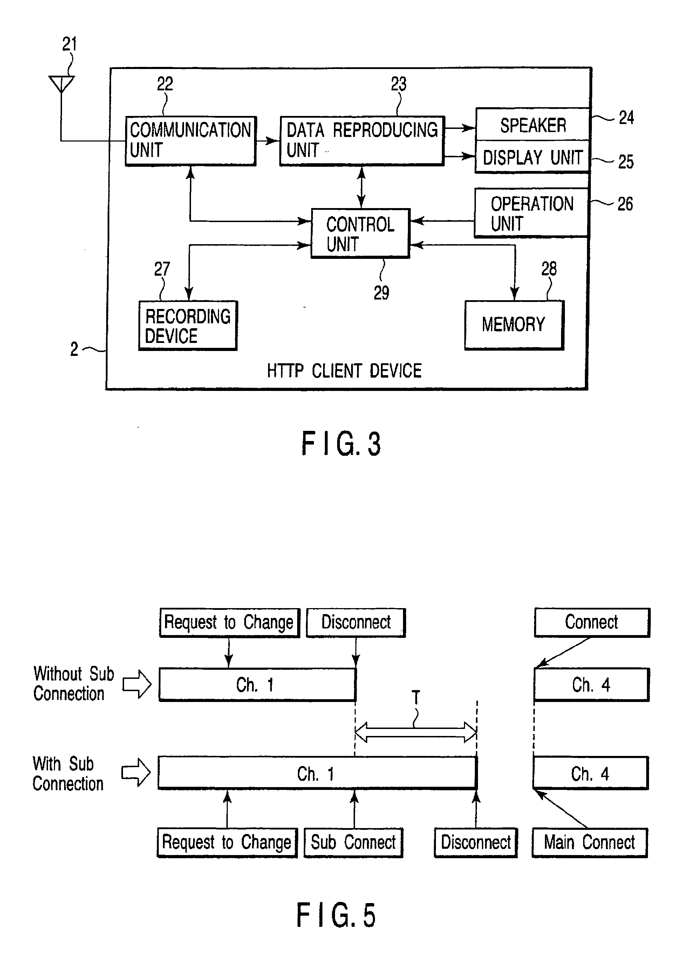

FIG. 3 shows the HTTP client device 2 shown in FIG. 1.

The HTTP client device 2 comprises an antenna 21 for wireless communication, a communication unit 22, a data reproducing unit 23, a speaker 24, a display unit 25, an operation unit 26, a recording device 27, memory 28, and a control unit 29.

The antenna 21 sends and receives electromagnetic signals to and from the HTTP server device 1.

The communication unit 22 performs wireless communication in compliance with a wireless LAN, such as IEEE802.11a, IEEE802.11b, or IEEE802.11g, for example. During the wireless communication, the communication unit 22 outputs connection requests to the HTTP server device 1 and receives transmitted video data. The communication unit 22, according to one embodiment of the invention, is capable of establishing a communication path that may receive video data from the HTTP server device 1, and is further capable of preparing a communication-ready path. Communication path refers to a condition under which the HTTP client device 2 is able to receive video data and request a video data transfer. The communication-ready path refers to a logic path, which is logically connected with the HTTP server device 1 and is on standby for a video data transfer request for the HTTP server device 1.

In other words, the communication-ready path is ready to communicate, but has not started to communicate yet. As the communication-ready path is a logic path, the communication-ready path is on standby without a video data transfer request being performed. After the communication path is established, and/or the communication-ready path is changed to the communication path, video data may be received, perhaps immediately, by the HTTP client device 2. The HTTP client device 2 does not receive video data through the communication-ready path.

The data reproducing unit 23 comprises an MPEG decoder, and decodes the video data received by the communication unit 22, and separates and outputs video data and sound data.

The speaker 24 outputs sound based on the sound data. The display unit 25 displays video data, as well as operation screens from TV application programs for viewing programs from TV broadcasts. The operation unit 26 is a man-machine interface, and may include a mouse, a keyboard, a keyboard controller, and/or an IR receiver that receives IR signals from a remote controller (not shown). The operation unit 26 is used for instructing the start of viewing TV broadcasting program, TV channel selecting and/or changing, or the end of viewing. In other words, the operation unit 26 receives a request or an instruction to, for example, change the current TV channel to a certain TV channel, or connect to a certain data source in the data creating unit 13 in the HTTP server device 1.

The recording device 27, such as a HDD or a DVD or the like, is a nonvolatile recording device using a nonvolatile medium. The recording device 27 stores the programs and data necessary for the operation of the control unit 29. In one embodiment of the invention, the recording device 27 stores a list of data indicating the relationship between the TV channels and the URLs.

The memory 28 is a volatile memory, such as RAM and the like, and is used as the work area of the control unit 29 for executing programs and the like.

The control unit 29 may be a CPU, and it controls all the operations of the HTTP client device 2. For example, the control unit 29 refers to the list stored in the recording device 27 when a request to change a TV channel or to connect to a certain data source is input via the operation unit 26, and specifies the URL indicating the data source corresponding to the particular TV channel. Then, the control unit 29 instructs the communication unit 22 to perform the connection request.

According to one embodiment of the invention, when a TV channel switching operation is to be performed in the state where the communication path has been established and the HTTP client device 2 is receiving video data from the HTTP server device 1, the control unit 29 controls the preparation of a communication-ready path (logic path) which is logically connected with the HTTP server device 1 and is on standby for making a video data transfer request to the HTTP server device 1. Then, the control unit 29 terminates the existing communication path between the HTTP server device 1 and the HTTP client device 2, subsequent to disconnection of the communication path by the HTTP server device 1. Next, the control unit 29 changes the communication-ready path (logic path) into a communication path to receive new video data. In other words, the control unit 29 makes a video data transfer request that the communication-ready path (logic path) is on standby.

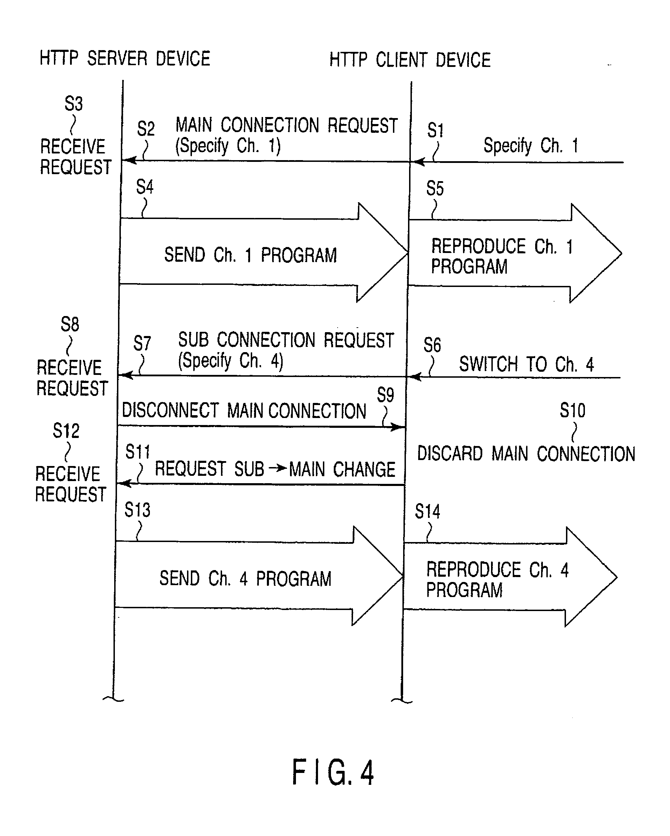

FIG. 4 shows an example of the operation the HTTP server device 1 and the HTTP client device 2 in the communication system of FIG. 1 when switching channels. For example, a user may provide instructions to switch to channel 4 after specifying channel 1.

When a user specifies channel 1 by operating the operation unit 26, the operation unit 26 of the HTTP client device 2 receives and detects a request related to the specification of channel 1(Operation S1). The control unit 29 of the HTTP client device 2 transfers MAIN CONNECTION REQUEST (hereinafter "MCR") including the URL corresponding to channel 1 to the HTTP server device 1 through the communication unit 22 (Operation S2). It is to be noted that the MCR is equivalent to the request for establishing the above-described communication path.

The communication unit 14 of the HTTP server device 1 receives the MCR (Operation S3), and establishes the communication path, which is under a condition of main connection, in accordance with the request. Thereafter, the HTTP server device 1 transmits the program for channel 1 to the HTTP client device 2 (Operation S4). As a result, the HTTP client device 2 reproduces the program for channel 1 and displays the output (Operation S5).

In the following description, consider an example that the user has performed the operation for switching from channel 1 to channel 4.

In this case, a user operates the operation unit 26 to input a request to change the channel from channel 1 to channel 4, to connect to a data source of channel 4. The operation unit 26 of the HTTP client device 2 receives and detects the request to change the channel including the specification of channel 4 (Operation S6). The control unit 29 performs a SUB CONNECTION REQUEST (hereinafter "SCR"), including the URL corresponding to channel 4, to the HTTP server device 1 through the communication unit 22 (Operation S7). It is to be noted that an SCR is equivalent to requesting the preparation and formation of the above-described communication-ready path.

The HTTP server device 1 receives the SCR (Operation S8), and prepares and establishes the communication-ready path by a sub connection, in accordance with the request. Thereafter, the control unit 29 of the HTTP server device 1 disconnects the main connection, transmitting program (video data) for channel 1 (Operation S9). It is to be noted that the HTTP server device 1 continues to send the program (video data) for channel 1 until the current main connection is disconnected.

The control unit 29 of the HTTP client device 2 detects disconnection of the existing main connection, and discards and terminates the main connection (Operation S10). This means termination of the current communication path. Then, the control unit 29 performs a request or an instruction given for the current sub connection to be changed to the main connection by the HTTP server device 1 (Operation S11). That is that the communication-ready path is changed to the communication path, and video data transfer starts accordingly.

The HTTP server device 1 receives the change request from the sub connection to the main connection (Operation S12), and changes the sub connection to the main connection in accordance with the request. In this way, the communication path for channel 4 has been established. Thereafter, the HTTP server 1 starts to send the program for channel 4 to the HTTP client device 2 through the communication path (Operation S13). As a result, the HTTP client device 2 reproduces the program for channel 4 and displays the output (Operation S14).

FIG. 5 is a diagram showing the timing of the exemplary operation of switching channels in FIG. 4.

The upper part of FIG. 5 shows the example that is without a sub connection. In other words, when the channel is switched from channel 1 to channel 4, the main connection for channel 1 is completely disconnected and then the main connection for channel 4 is connected, without having a sub connection for a communication-ready path.

The lower part of FIG. 5 shows the example with a sub connection. Before the main connection for channel 1 is disconnected, a sub connection for a communication-ready path is prepared. At this point, the main connection for channel 1 is not disconnected yet. Subsequent to preparation of the sub connection for the communication-ready path, the main connection for channel 1 is disconnected by the HTTP server device 1. Then, the sub connection for the communication-ready path for channel 4 is changed to a main connection for a communication path for channel 4 shortly thereafter.

As a result, according to embodiments of the invention, the time it takes for switching from channel 1 to channel 4 is reduced by at least T seconds when compared to the switching method without the sub connection.

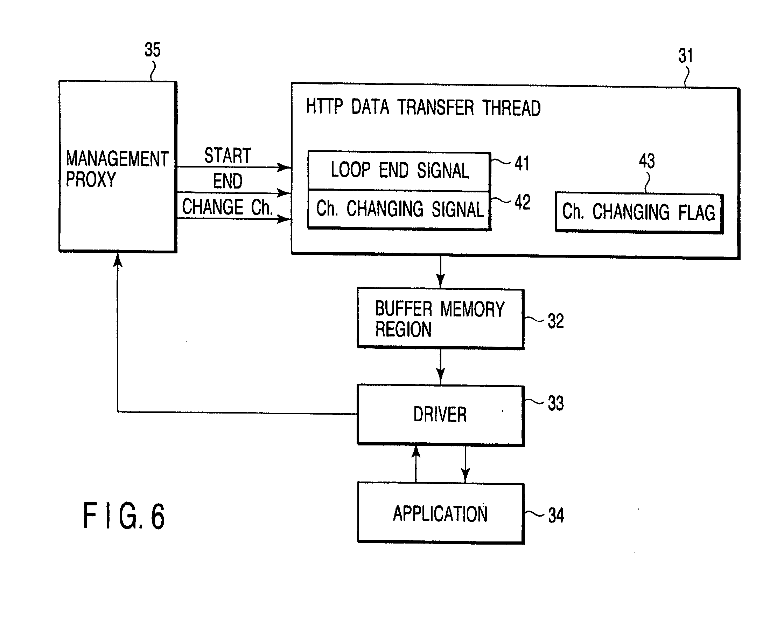

FIG. 6 shows the functional configuration of the software for the HTTP client device 2. The software for the HTTP client device 2 is stored in the recording device 27, and is executed by the control unit 29.

An HTTP data transfer thread 31 transfers data based on HTTP and performs control thereof. The HTTP data transfer thread 31 secures a buffer memory region 32 for use in the processing of the video data, and controls the processing for display output of the video data sent from the HTTP server device 1, via the buffer memory region 32, the driver 33 and the application 34. Also, the HTTP data transfer thread 31 starts and ends video data transfer processing and performs the channel switching in response to an instruction or a request (hereinafter collectively referred to as "instruction"), from a user. The instruction from the user is received through the application 34 and the operation unit 26.

The buffer memory region 32 is a region formed in memory 28 of FIG. 3 by the HTTP data transfer thread 31 for data transfer.

The driver 33 performs control for the display and output of video data sent from the HTTP server device 1 via the application 34, and informs the management proxy 35 of the content of the instructions that the user provides via the operation unit 26 and the operation screen provided by the application 34.

The application 34 is a TV application program that the user uses for viewing TV broadcast programs. The application 34 displays the video data for the TV broadcast program and the operation screen and the like in a predetermined window. To view a certain TV broadcast program, the user inputs the instruction into the operation screen by operating the mouse or the keyboard of the operation unit 26.

The management proxy 35 receives the content of the instruction given by the user via the application 34. The instruction includes instructions for start and end of viewing and channel changes and the like. The management proxy 35 informs the HTTP data transfer thread 31 of the content of the instruction in the form of signals. Examples of the data information to be communicated by the management proxy 35 to the HTTP data transfer thread 31 include the start command for data transfer, loop end signals, channel changing signals and the like.

The HTTP data transfer thread 31 comprises loop end signal information (S-End) 41, channel changing signal information (S-Change) 42, and channel changing flag (F-change) 43.

The loop end signal information 41 is set to ON or OFF based on the loop end signal sent by the management proxy 35. The loop end signal indicates whether there is an instruction for data transfer ending. When there is an instruction for end of data transfer, the loop end signal information 41 is set to ON. It is to be noted that the loop end signal 41 is set to OFF at the time of the initialization setting.

The channel changing signal information 42 is set to ON or OFF based on the channel changing signal sent by the management proxy 35. The channel changing signal indicates whether or not there is an instruction for changing the channel. Changing the channel includes meanings of setting a certain channel and/or of connecting to a certain External data source. When there is an instruction for changing the channel, the channel changing signal information 42 is set to ON. It is to be noted that the channel changing signal information 42 is set to OFF at the time of initialization setting, and also set to OFF when the sub connection is performed.

The channel changing flag 43 indicates whether the channel changing instruction is in the processing state. In other words, the channel changing flag 43 indicates whether or not a sub connection for a communication-ready path exists. If the channel changing instruction is in the processing state, the communication-ready path is provided by the sub connection and the channel changing flag 43 is set to ON. It is to be noted that the channel changing flag 43 is typically set to OFF when the sub connection for the communication-ready path is changed to a main connection for a communication path.

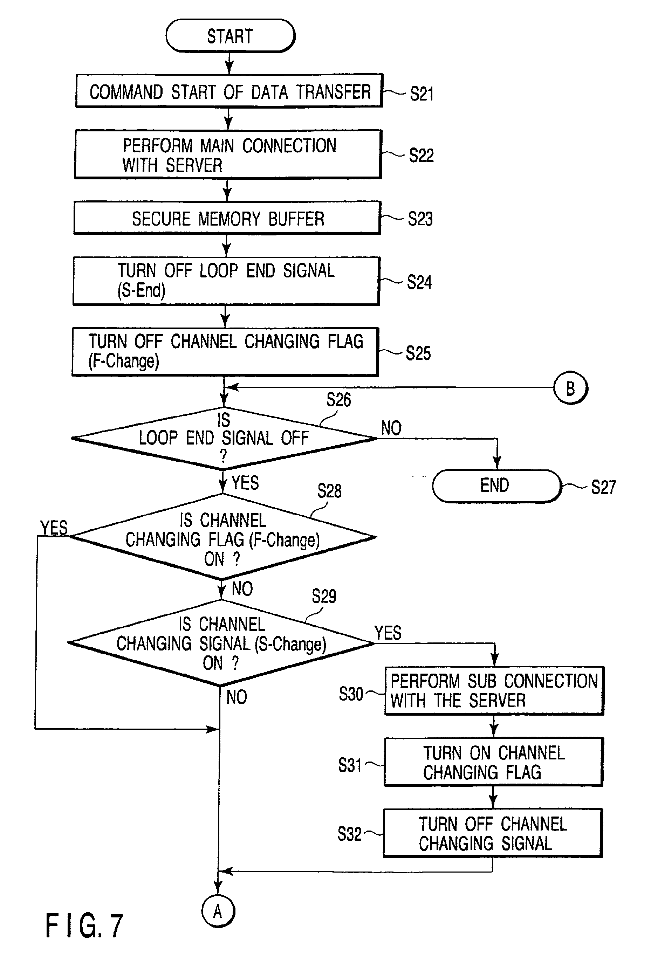

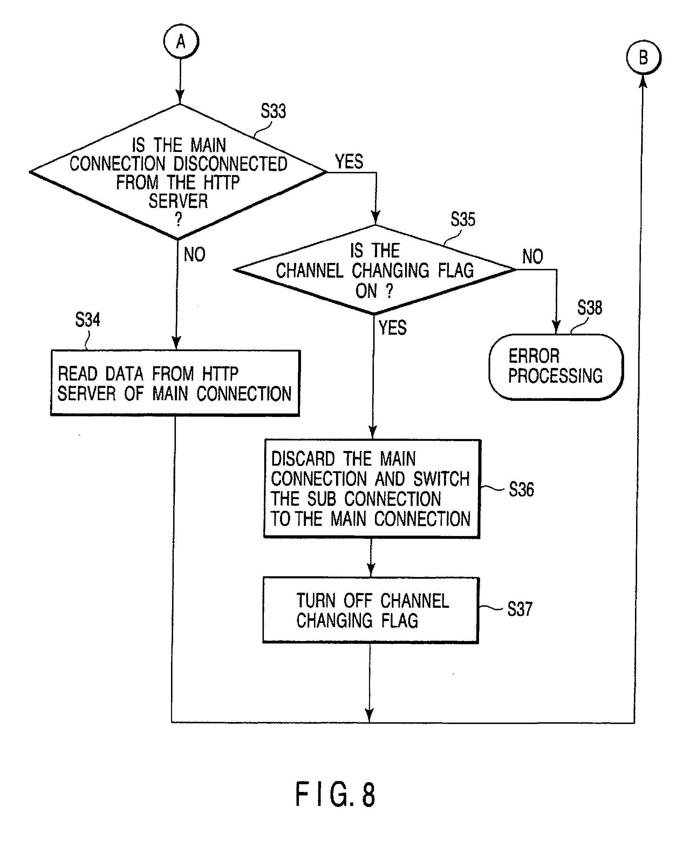

The following describes exemplary operation of the HTTP data transfer thread 31 illustrated in FIG. 6 will with reference to FIGS. 7 and 8.

The HTTP data transfer thread 31 receives a start command for data transfer (Block S21), and establishes a communication path by a main connection with the HTTP server device 1 (Block S22). At that time, the HTTP data transfer thread 31 secures the buffer memory region (Block S23). The HTTP data transfer thread 31 then performs initialization processing by setting the loop end signal information 41 and the channel changing signal 42 to OFF (Block S24) and then setting the channel changing flag 43 to OFF (Block S25).

Next, the HTTP data transfer thread 31 determines whether the loop end signal information 41 is ON or OFF (Block S26). If it is ON, the data transfer process ends (Block S27). On the other hand, if it is OFF, a determination is made as to whether the channel changing flag 43 is ON or OFF (Block S28).

If the channel changing flag 43 is ON in Block S28, then the process goes to Block S33 illustrated in FIG. 8. On the other hand, if the channel changing flag 43 is OFF, a determination is made as to whether the channel changing signal 42 is ON or OFF (Block S29).

If the channel changing signal information 42 is ON in Block S29, a sub connection for a communication-ready path with the HTTP server device 1 is prepared and performed (Block S30), the channel changing flag 43 is set to ON (Block S31), and the channel changing signal 42 is set to OFF (Block S32). The process then goes to perform the operations of Block S33 as illustrated in FIG. 8.

However, if the channel changing signal information 42 is OFF in Block S29, then Block S33 illustrated in FIG. 8 is performed next.

At Block S33 illustrated in FIG. 8, the HTTP data transfer thread 31 determines whether the main connection for the communication path has been disconnected from the HTTP server device 1. If it has not been disconnected, data is read from the HTTP server device 1 via the communication path by the main connection (Block S34), and the process is repeated from Block S26. On the other hand, if the main connection for the communication path has been disconnected, a determination is made as to whether the channel changing flag 43 is ON or OFF (Block S35).

If the channel changing flag 43 is OFF in Block S35, then it is assumed that there was some kind of obstacle and a predetermined error processing is performed (Block S38). On the other hand, if the channel changing flag 43 is ON, the current existing communication path by the main connection is discarded, and the communication-ready path provided by the sub connection is changed to the communication path provided by the main connection (Block S36). The channel changing flag 43 is then set to OFF (Block S37), and the process is repeated from Block S26.

In this manner, when there is an instruction for channel changing, the disconnection of the main connection is not performed immediately, but rather the communication-ready path by the sub connection for the channel to which the change will be made is prepared. In addition, immediately after disconnection of the main connection of channel 1 by the HTTP server device 1 is performed, the communication-ready path by the sub connection for the channel to which the change will be made becomes the communication path by the main connection. Thus, it appears that the time for switching channels is shortened, and the visual discomfort to a user is reduced.

It is to be noted that in this exemplary embodiment, the HTTP server device 1 and HTTP client device 2 are physically separate devices, but the present invention is not to be limited to this example, and the configuration may, for instance, may be such that the HTTP server device 1 and the HTTP client device 2 form the same device.

In addition, in the example of the above embodiment, the video data obtained directly from the TV tuner is sent from the HTTP server device 1 to the HTTP client device 2 based on the request from the HTTP client device 2. However, the embodiments of the invention are not to be so limited. Video data for a TV program that has been recorded onto a recording medium for instance, may be read and then sent from the HTTP server device 1 to the HTTP client device 2.

The embodiments of the invention are not to be limited by the above-described embodiment of the invention. The structural elements may be modified without departing from the scope of the invention. Furthermore, various embodiments of the invention may be formed by suitably combining the multiple structural elements disclosed in the above-described embodiment. For example, some structural elements may be eliminated from those disclosed in the exemplary embodiment of the invention previously described. In addition, structural elements from other embodiments of the invention may be suitably combined.

## Claims

1. An electronic device (1), comprising:
a communication unit (12) to receive one of a first video data from a first external data source and a second video data from a second external data source through a communication path;
an interface (14) to receive a request to connect to the second external data source; and
a control unit (18) coupled to the communication unit and the interface, in response to the communication unit receiving the first video data through the communication path and the interface receiving the requisite connect to the second external data source, **characterized by** said control unit (18) being adapted:
to establish a sub connection for preparation of communication with the second external data source while a connection forming the communication path with the first external data source is maintained, and
to terminate the connection forming the communication path with the first external data source after completing the establishment of the sub connection and
change the sub connection into a connection forming the communication path with the second external data source to receive the second video data, the first video data being continued to be sent from the first external data source to the communication unit (12) until the connection forming the communication path with the first external data source is terminated.

2. An electronic device (1) according to claim 1, wherein
the first external data source corresponds to a first channel of a broadcasting station and the second external data source corresponds to a second channel of a broadcasting station.

3. An electronic device (1) according to claim 2, further comprising:
a memory (16 or 17) to store a plurality of Uniform Resource Locators indicating the first external data resource and the second external data source.

4. An electronic device (1) according to claim 3, wherein
the memory (16 or 17) stores data indicating correspondence between each channel and each Uniform Resource Locator.

5. An electronic device (1) according to claim 4, wherein
the control unit (18) establishes the sub connection in response to one of the plurality of Uniform Resource Locators corresponding to the second external data source.

6. A method to receive data from external data sources, the method comprising:
receiving (S4) a first video data from a first external data source through a communication path;
receiving (S7, S8) a request to connect to a second external data source that is different from the first external data source; **characterized by** the steps of
(S8) establishing a sub connection for preparation of communication with the second external data source while maintaining a connection forming the communication path with the first external data source;
terminating (S9) the connection forming the communication path with the first external data source after completing the establishment of the sub connection; and
changing (S11 to S13) the sub connection into a connection forming a communication path with the second external data source to receive a second video data, the first video data being continued to be sent from the first external data source to the communication unit (12) until the connection forming the communication path with the first external data source is terminated.

7. A method according to claim 6, wherein
the first external data source corresponds to a first channel of a broadcasting station, and
the second external data source corresponds to a second channel of a broadcasting station.

8. A method according to claim 7, further comprising:
using a Uniform Resource Locator to indicate the first external data resource or the second external data source with which to establish the connection forming the communication path.

9. A method according to claim 7, further comprising:
using a Uniform Resource Locator to indicate the second external data source to establish the sub connection.

## Patentansprüche

1. Elektronische Vorrichtung (1), mit:
einer Kommunikationseinheit (12), um erste Videodaten von einer ersten externen Datenquelle oder zweite Videodaten von einer zweiten externen Datenquelle über einen Kommunikationsweg zu empfangen;
einer Schnittstelle (14), zum Empfang um einer Anforderung zu, um eine Verbindung mit der zweiten externen Datenquelle herzustellen; und
einer Steuereinheit (18), die mit der Kommunikationseinheit und der Schnittstelle gekoppelt ist, wobei in Abhängigkeit von dem Empfang der ersten Daten durch die Kommunikationseinheit über den Kommunikationsweg und den Empfang der Anforderung durch die Schnittstelle, eine Verbindung mit der zweiten externen Datenquelle herstellt, **dadurch gekennzeichnet, dass** die Steuereinheit (18) angepasst ist,
um eine Unterverbindung einzurichten, um eine Kommunikation mit der zweiten externen Datenquelle vorzubereiten, während eine Verbindung aufrechterhalten wird, die den Kommunikationsweg mit der ersten externen Datenquelle bildet, und
um die Verbindung, die den Kommunikationsweg mit der ersten externen Datenquelle bildet, nach Fertigstellen der Einrichtung der Unterverbindung zu beenden, und
die Unterverbindung in eine Verbindung zu ändern, die den Kommunikationsweg mit der zweiten externen Datenquelle bildet, um die zweiten Videodaten zu empfangen, wobei die ersten Videodaten weiterhin von der ersten externen Datenquelle an die Kommunikationseinheit (12) gesendet werden, bis die Verbindung, die den Kommunikationsweg mit der ersten externen Datenquelle bildet, beendet wird.

2. Elektronische Vorrichtung (1) gemäß Anspruch 1, bei der
die erste externe Datenquelle einem ersten Kanal einer Rundfunkstation und die zweite externe Datenquelle einem zweiten Kanal einer Rundfunkstation entspricht.

3. Elektronische Vorrichtung (1) gemäß Anspruch 2, ferner mit:
einem Speicher (16 oder 17), um eine Mehrzahl von Uniform Resource Locators zu speichern, die die erste externe Datenquelle und die zweite externe Datenquelle angeben.

4. Elektronische Vorrichtung (1) gemäß Anspruch 3, **dadurch gekennzeichnet, dass**
der Speicher (16 oder 17) Daten speichert, die eine Übereinstimmung zwischen jedem Kanal und jedem Uniform Resource Locator angeben.

5. Elektronische Vorrichtung (1) gemäß Anspruch 4, **dadurch gekennzeichnet, dass**
die Steuereinheit (18) die Unterverbindung in Abhängigkeit von einem der Mehrzahl von Uniform Resource Locators einrichtet, die der zweiten externen Datenquelle entsprechen.

6. Verfahren, um Daten von externen Datenquellen zu empfangen, wobei das Verfahren umfasst:
Empfangen (S4) erster Videodaten von einer ersten externen Datenquelle über einen Kommunikationsweg;
Empfangen (S7, S8) einer Anforderung, um eine Verbindung mit einer zweiten externen Datenquelle herzustellen, die von der ersten externen Datenquelle unterschiedlich ist; **gekennzeichnet durch** die folgenden Schritte:
Einrichten (S8) einer Unterverbindung, um eine Kommunikation mit der zweiten externen Datenquelle vorzubereiten, während eine Verbindung aufrechterhalten wird, die den Kommunikationsweg mit der ersten externen Datenquelle bildet;
Beenden (S9) der Verbindung, die den Kommunikationsweg mit der ersten externen Datenquelle bildet, nach Fertigstellen der Einrichtung der Unterverbindung; und
Ändern (S11 to S13) der Unterverbindung in eine Verbindung, die einen Kommunikationsweg mit der zweiten externen Datenquelle bildet, um zweite Videodaten zu empfangen, wobei die ersten Videodaten weiterhin von der ersten externen Datenquelle zu der Kommunikationseinheit (12) gesendet werden, bis die Verbindung beendet ist, die den Kommunikationsweg mit der ersten externen Datenquelle bildet.

7. Verfahren gemäß Anspruch 7, bei dem
die erste externe Datenquelle einem ersten Kanal einer Rundfunkstation entspricht, und
die zweite externe Datenquelle einem zweiten Kanal einer Rundfunkstation entspricht.

8. Verfahren gemäß Anspruch 7, ferner mit:
verwenden eines Uniform Resource Locator, um die erste externe Datenquelle oder die zweite externe Datenquelle anzugeben, mit der die Verbindung einzurichten ist, die den Kommunikationsweg bildet.

9. Verfahren gemäß Anspruch 7, ferner mit:
Verwenden eines Uniform Resource Locator, um die zweite externe Datenquelle anzugeben, um die Unterverbindung einzurichten.

## Revendications

1. Dispositif électronique (1), comprenant :
une unité de communication (12) destinée à recevoir l'une de premières données vidéo de la part d'une première source de données externe et de secondes données vidéo de la part d'une seconde source de données externe par le biais d'un trajet de communication ;
une interface (14) destinée à recevoir une demande de connexion à la seconde source de données externe ; et
une unité de commande (18) couplée à l'unité de communication et à l'interface, en réponse à l'unité de communication recevant les premières données vidéo par le biais du trajet de communication et à l'interface recevant la demande de connexion à la seconde source de données externe, **caractérisé par** ladite unité de commande (18) étant adaptée :
afin d'établir une sous-connexion pour la préparation de la communication avec la seconde source de données externe pendant qu'une connexion formant le trajet de communication avec la première source de données externe est maintenue, et
afin de mettre fin à la connexion formant le trajet de communication avec la première source de données externe après avoir effectué l'établissement de la sous-connexion, et
afin de transformer la sous-connexion en une connexion formant le trajet de communication avec la seconde source de données externe de façon à recevoir les secondes données vidéo, les premières données vidéo étant toujours envoyées par la première source de données externe à l'unité de communication (12) jusqu'à ce que la connexion formant le trajet de communication avec la première source de données externe soit terminée.

2. Dispositif électronique (1) selon la revendication 1, dans lequel
la première source de données externe correspond à un premier canal d'une station de diffusion et la seconde source de données externe correspond à un second canal d'une station de diffusion.

3. Dispositif électronique (1) selon la revendication 2, comprenant en outre :
une mémoire (16 ou 17) destinée à stocker une pluralité de localisateurs de ressources uniformes indiquant la première source de données externe et la seconde source de données externe.

4. Dispositif électronique (1) selon la revendication 3, dans lequel
la mémoire (16 ou 17) stocke des données indiquant une correspondance entre chaque canal et chaque localisateur de ressource uniforme.

5. Dispositif électronique (1) selon la revendication 4, dans lequel
l'unité de commande (18) établit la sous-connexion en réponse à l'un de la pluralité de localisateurs de ressources uniformes correspondant à la seconde source de données externe.

6. Procédé de réception de données de la part de sources de données externes, le procédé comprenant :
la réception (S4) de premières données vidéo de la part d'une première source de données externe par le biais d'un trajet de communication ;
la réception (S7, S8) d'une demande de connexion à une seconde source de données externe qui est différente de la première source de données externe ; **caractérisé par** les étapes consistant à :
établir (S8) une sous-connexion pour la préparation de la communication avec la seconde source de données externe tout en maintenant une connexion formant le trajet de communication avec la première source de données externe ;
mettre fin (S9) à la connexion formant le trajet de communication avec la première source de données externe après avoir effectué l'établissement de la sous-connexion ; et
la transformation (S11 à S13) de la sous-connexion en une connexion formant un trajet de communication avec la seconde source de données externe afin de recevoir des secondes données vidéo, les premières données vidéo étant toujours envoyées par la première source de données externe à l'unité de communication (12) jusqu'à ce que la connexion formant le trajet de communication avec la première source de données externe soit terminée.

7. Procédé selon la revendication 6, dans lequel
la première source de données externe correspond à un premier canal d'une station de diffusion, et
la seconde source de données externe correspond à un second canal d'une station de diffusion.

8. Procédé selon la revendication 7, comprenant en outre :
l'utilisation d'un localisateur de ressource uniforme afin d'indiquer la première source de données externe ou la seconde source de données externe avec laquelle la connexion formant le trajet de communication doit être établie.

9. Procédé selon la revendication 7, comprenant en outre :
l'utilisation d'un localisateur de ressource uniforme afin d'indiquer la seconde source de données externe de façon à établir la sous-connexion.
